(19)

**Europäisches Patentamt**
**European Patent Office**
**Office européen des brevets**

(11)  **EP 4 435 671 B1**

(12)  **EUROPEAN PATENT SPECIFICATION**

(45) Date of publication and mention
of the grant of the patent:
**15.07.2026  Bulletin 2026/29**

(21) Application number: **23212958.5**

(22) Date of filing: **29.11.2023**

(51) International Patent Classification (IPC):
**G06N 3/045** *(2023.01)*   **G01S 13/00** *(2006.01)*
**G01S 17/00** *(2020.01)*   **G06N 3/096** *(2023.01)*
**G06V 10/00** *(2022.01)*

(52) Cooperative Patent Classification (CPC):
**G06N 3/045; G01S 13/887; G06N 3/096;**
**G06V 10/764; G06V 20/52**

(54)  **INSPECTION SYSTEM AND INSPECTION METHOD**

INSPEKTIONSSYSTEM UND INSPEKTIONSVERFAHREN

SYSTÈME D'INSPECTION ET PROCÉDÉ D'INSPECTION

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority:  **20.03.2023  JP 2023044380**

(43) Date of publication of application:
**25.09.2024  Bulletin 2024/39**

(73) Proprietor: **KABUSHIKI KAISHA TOSHIBA**
**Minato-ku**
**Tokyo**
**105-0023 (JP)**

(72) Inventor: **SEKIYA, Ryota**
**Minato-ku, Tokyo, 105-0023 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 405 260**   **US-A1- 2019 069 859**

- **MARVIN KLINGNER ET AL: "X^3KD: Knowledge Distillation Across Modalities, Tasks and Stages for Multi-Camera 3D Object Detection", ARXIV.ORG, CORNELL UNIVERSITY LIBRARY, 201 OLIN LIBRARY CORNELL UNIVERSITY ITHACA, NY 14853, 3 March 2023 (2023-03-03), XP091453088**
- **CHEN HONGYUAN ET AL: "Super-resolution guided knowledge distillation for low-resolution image classification", PATTERN RECOGNITION LETTERS, ELSEVIER, AMSTERDAM, NL, vol. 155, 13 February 2022 (2022-02-13), pages 62 - 68, XP086994203, ISSN: 0167-8655, [retrieved on 20220213], DOI: 10.1016/J.PATREC.2022.02.006**
- **SUN PEI ET AL: "Scalability in Perception for Autonomous Driving: Waymo Open Dataset", 2020 IEEE/CVF CONFERENCE ON COMPUTER VISION AND PATTERN RECOGNITION (CVPR), IEEE, 13 June 2020 (2020-06-13), pages 2443 - 2451, XP033805237, DOI: 10.1109/ CVPR42600.2020.00252**

**Description**

FIELD

The present disclosure relates to an inspection system and an inspection method.

BACKGROUND

An inspection system including a plurality of inspection devices that inspect belongings of the inspection target has been proposed. The plurality of inspection devices perform inspection in stages. Each of the plurality of inspection devices measures information in order to determine different items related to a predetermined object (here, a handgun) Similar techniques can be found in MARVIN KLINGNER ET AL: "X^3KD: Knowledge Distillation Across Modalities, Tasks and Stages for Multi-Camera 3D Object Detection"; and in CHEN HONGYUAN ET AL: "Super-resolution guided knowledge distillation for low-resolution image classification", 2022.

BRIEF DESCRIPTION OF THE DRAWINGS

FIG. 1 is a diagram for describing an example of an inspection system according to an arrangement.
FIG. 2 is a diagram for explaining an example of a machine learning model according to the arrangement.
FIG. 3 is a diagram for explaining an example of data stored in a measurement data memory according to the arrangement.
FIG. 4 is a diagram for describing an example of update data according to the arrangement.
FIG. 5 is a flowchart for explaining a first half of an example of processing of the inspection device according to the arrangement.
FIG. 6 is a flowchart for explaining a second half of an example of processing of the inspection device according to the arrangement.
FIG. 7 is a diagram for describing a first application example of an inspection system according to the arrangement.
FIG. 8 is a diagram for describing a second application example of an inspection system according to the arrangement.
FIG. 9 is a flowchart for explaining an example of processing of a control device according to the arrangement.
FIG. 10 is a diagram for describing a modification of the inspection system according to the arrangement.
FIG. 11 is a diagram for describing an example of arrangement of the inspection devices according to the arrangement.
FIG. 12 is a diagram for describing an example of a detailed configuration of each of first, second, and third inspection devices according to the arrangement.
FIG. 13 is a block diagram for explaining an example of a measurement unit according to the arrangement.
FIG. 14A is a diagram for describing an example of a waveform of a chirp signal according to the arrangement.
FIG. 14B is a diagram for describing an example of a waveform of a chirp signal according to the arrangement.
FIG. 15A is a diagram for explaining an example of a received signal according to the arrangement.
FIG. 15B is a diagram for explaining an example of a received signal according to the arrangement.
FIG. 15C is a diagram for explaining an example of a received signal according to the arrangement.
FIG. 16A is a diagram for explaining an example of the reflection intensity distribution according to the arrangement.
FIG. 16B is a diagram for explaining an example of the reflection intensity distribution according to the arrangement.
FIG. 16C is a diagram for explaining an example of the reflection intensity distribution according to the arrangement.

DETAILED DESCRIPTION

Various arrangements will be described hereinafter with reference to the accompanying drawings.
In order to make the description clearer, the sizes, shapes, and the like of the respective parts may be changed and illustrated schematically in the drawings as compared with those in an accurate representation. Constituent elements corresponding to each other in a plurality of drawings are denoted by like reference numerals and their detailed descriptions may be omitted unless necessary.
According to one arrangement, an inspection system includes a first measurement unit configured to measure a target, a first determination unit configured to make a first determination on whether the target includes a predetermined object using a first machine learning model based on a measurement result by the first measurement unit, a second measurement unit configured to measure the target, a second determination unit configured to make a second determination on whether the target includes the predetermined object based on a measurement result by the second measurement unit, and a processing unit configured to generate first update data of the first machine learning model based on a result of the second determination and transmit the first update data to the first determination unit.

An inspection system includes a plurality of inspection devices. Each of the inspection devices can obtain a determination result using a machine learning model based on a measurement result. When the machine learning model is prepared for each of the inspection devices, a determination result by a certain inspection device may not match a determination result by another inspection device. It is assumed that the inspection system includes first and second inspection devices. The first inspection device determines "whether an inspection target possesses a metal object". The second inspection device determines "where and what the inspection target possesses". When the determination result by the first inspection device is "the inspection target has a metal object" and the determination result by the second inspection device is "the inspection target has a notebook in the left chest pocket", the "metal object" and the "notebook" do not match with each other. In this case, it is difficult for the inspection system to accurately identify the inspection target holding the handgun in the end. The purpose of the arrangements is to overcome such a problem.

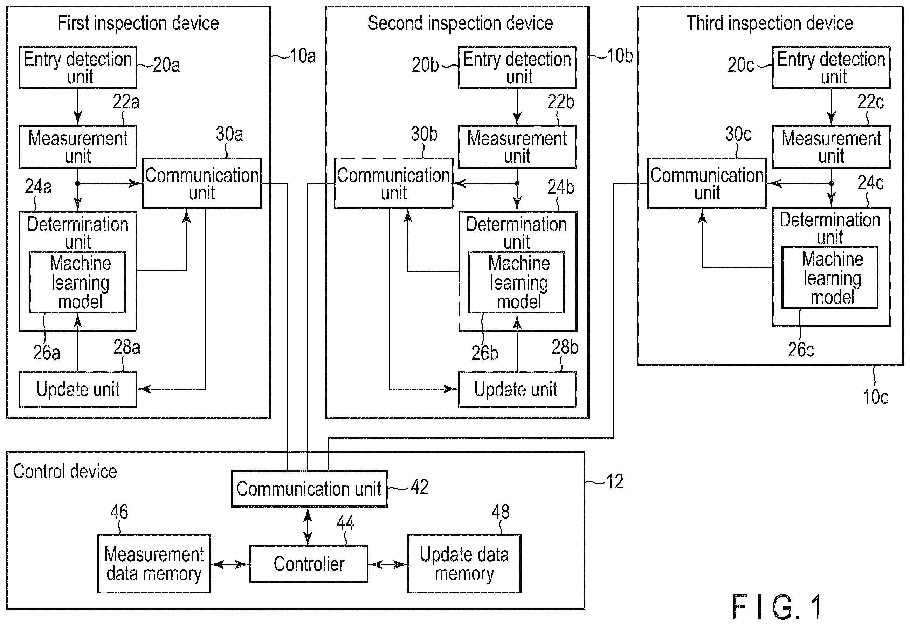

FIG. 1 is a diagram for describing an example of an inspection system according to an arrangement. An inspection system related to security will be described as an arrangement of the inspection system. The inspection system is disposed in an area where many and unidentified persons exist, such as a station, a commercial facility, a concert hall, or an amusement park. Carrying predetermined objects, for example dangerous objects such as handguns, knives, and explosives, into this area is not permitted. Hereinafter, a handgun will be described as the predetermined object. The inspection system identifies an inspection target including a handgun. Here, "including" means, for example, being worn or being included in baggage. When the inspection system identifies an inspection target carrying a handgun, a person in charge carefully may examine the inspection target.

The inspection system includes a plurality of inspection devices. FIG. 1 illustrates an example of an inspection system including three inspection devices according to the first arrangement. The inspection system includes a first inspection device 10a, a second inspection device 10b, a third inspection device 10c, and a control device 12. The first inspection device 10a, the second inspection device 10b, and the third inspection device 10c are connected to the control device 12. The number of inspection devices may be two or three or more.

When a person in charge is present at the installation place of the inspection system, the person in charge guides the inspection target to the first inspection device 10a, the second inspection device 10b, and the third inspection device 10c in this order. As a result, the inspection target is inspected by the first inspection device 10a, the second inspection device 10b, and the third inspection device 10c in this order.

When the inspection system is installed in a place where there is a human flow such as a passage, the first inspection device 10a, the second inspection device 10b, and the third inspection device 10c are installed in order according to the flow of the inspection target. For example, when the inspection system is installed in a pedestrian passage, the first inspection device 10a is installed at the entrance of the passage, the third inspection device 10c is installed at the exit of the passage, and the second inspection device 10b is installed between the first inspection device 10a and the third inspection device 10c. Accordingly, the inspection target moving on the passage is inspected by the first inspection device 10a, the second inspection device 10b, and the third inspection device 10c in this order.

The first inspection device 10a includes an entry detection unit 20a, a measurement unit 22a, a determination unit 24a, an update unit 28a, and a communication unit 30a.

The entry detection unit 20a detects that an inspection target enters an inspection range of the first inspection device 10a. Examples of the entry detection unit 20a include a human sensor and a camera. When the entry detection unit 20a detects entry of an inspection target, the measurement unit 22a starts measurement and generates identification information (inspection target ID) of the inspection target.

The communication unit 30a transmits the inspection target ID to the control device 12. The control device 12 transmits the inspection target ID to the second inspection device 10b and the third inspection device 10c.

The measurement unit 22a obtains a first feature amount of the inspection target. Examples of the measurement unit 22a include a radar, a metal detector, a liquid detector, an X-ray diagnosis device, and a camera. The measurement unit 22a transmits the first measurement data indicating the first feature amount together with the inspection target ID to the determination unit 24a and the communication unit 30a. The measurement unit 22a may include a memory that temporarily stores the first measurement data.

The determination unit 24a includes a machine learning model 26a. The machine learning model 26a is a circuit that outputs a first determination result when given certain first measurement data. The determination result is referred to as a label. The machine learning model may be referred to as an artificial intelligence (AI) model. An example of a machine learning model is a convolution neural network. The machine learning model 26a is generated by measuring a large number of inspection targets by the measurement unit 22a and assigning one or more first labels to each of first measurement data. The first label is input by an operator.

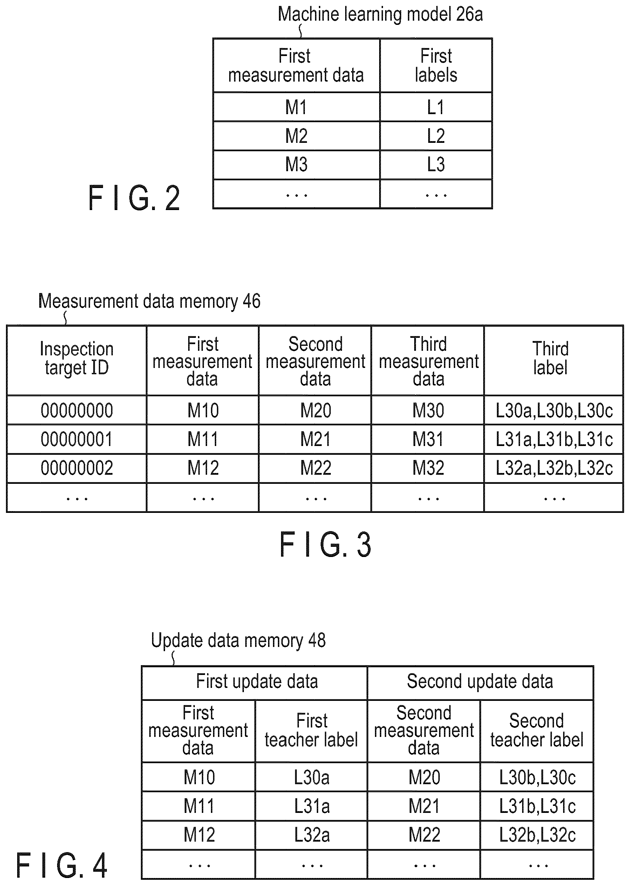

FIG. 2 is a diagram for explaining an example of the machine learning model 26a according to the first arrangement. The machine learning model 26a includes a plurality of first measurement data M1, M2, M3, ..., and a plurality of first labels L1, L2, L3, .... The machine learning model 26a is data indicating a correspondence relationship between the first measurement data and the first label. FIG. 2 illustrates an example in which the first measurement data M1, M2, M3, ... corresponds to the first labels L1, L2, L3, ..., respectively. The number of first labels corresponding to one piece of first measurement data may be plural.

Returning to the description of FIG. 1, the first measurement data is input to the determination unit 24a. The determination unit 24a makes the first determination using the machine learning model 26a. The first determination is to determine one or more first labels corresponding to the first measurement data. An example of the first determination is "whether the inspection target possesses a metal object". The determination unit 24a outputs a single first label "metal object possessed" or "metal object not possessed" for one piece of first measurement data. The first label is part of the final label of the inspection system. Therefore, assuming that the final reliability of the label of the inspection system is 1, the reliability of the first label is 1 or less.

In a case where a person in charge is present at the installation place of the inspection system, the determination unit 24a may notify the person in charge of the information about the first label by text display or sound output using a display device or a speaker (not illustrated). In a case where a person in charge is not present at the installation place of the inspection system, the determination unit 24a may transmit the first label to an electronic device carried by the person in charge or a display device in a management room where the person in charge waits via the communication unit 30a. The determination unit 24a may include a memory that temporarily stores the first label.

The communication unit 30a transmits the first measurement data together with the inspection target ID to the control device 12. The communication unit 30a receives the first update data transmitted from the control device 12. The communication unit 30a transmits the first update data to the update unit 28a. The update unit 28a updates (may be referred to as relearning) the machine learning model 26a based on the first update data. The correspondence relationship between the first measurement data M1, M2, M3, ..., and the plurality of first labels L1, L2, L3, ... is changed by the update of the machine learning model 26a. After updating the machine learning model 26a, the measurement unit 22a may measure the inspection target again, and the determination unit 24a may make the first determination again based on the measurement data measured again. After updating the machine learning model 26a, the measurement unit 22a may not measure again the inspection target, and the determination unit 24a may make the first determination again based on the already obtained first measurement data.

The second inspection device 10b includes an entry detection unit 20b, a measurement unit 22b, a determination unit 24b, an update unit 28b, and a communication unit 30b.

The entry detection unit 20b, the measurement unit 22b, the determination unit 24b, the update unit 28b, and the communication unit 30b respectively correspond to the entry detection unit 20a, the measurement unit 22a, the determination unit 24a, the update unit 28a, and the communication unit 30a.

When the entry detection unit 20b detects that the inspection target which has been inspected by the first inspection device 10a enters the inspection range of the second inspection device 10b, the measurement unit 22b starts measurement.

Examples of the measurement unit 22b include a radar, a metal detector, a liquid detector, an X-ray diagnosis device, and a camera.

The measurement unit 22b may obtain the first feature amount of the inspection target, as in the measurement unit 22a. The measurement unit 22a may obtain the first feature amount at the first level of detail, and the measurement unit 22b may obtain the first feature amount at the second level of detail. The second level of detail may be higher than the first level of detail. The inspection device 10b inspects the target more precisely than the inspection device 10a. The communication unit 30b receives the inspection target ID from the control device 12. The measurement unit 22b transmits the second measurement data indicating the first feature amount to the determination unit 24b and the communication unit 30b. The measurement unit 22b may include a memory that temporarily stores the second measurement data.

When the measurement units 22a and 22b are radars, each of the measurement units 22a and 22b transmits an electromagnetic wave to the inspection target and receives a reflected wave from the inspection target. The reflectance of the electromagnetic wave to the metal object is higher than the reflectance of the electromagnetic wave to the skin. Each of the measurement units 22a and 22b obtains an image indicating the distribution of the reflectance of the electromagnetic wave at each point of the inspection target. The level of detail is related to the resolution of the image. The resolution of the image obtained by the measurement unit 22b may be higher than that of the image obtained by the measurement unit 22a. The resolution of the image depends on the number of radar antennas composing the image.

Alternatively, unlike the measurement unit 22a, the measurement unit 22b may obtain the second feature amount of the inspection target. The second feature amount is different from the first feature amount. The measurement unit 22a may obtain the first feature amount at the first level of detail, and the measurement unit 22b may obtain the second feature amount at the second level of detail. The second level of detail may be higher than the first level of detail. The measurement unit 22b may transmit the second feature amount as second measurement data to the determination unit 24b. Assuming that the measurement unit 22a is a radar and the measurement unit 22b is a metal detector, in a case where a metal object is identified, information (second feature amount) obtained by the metal detector has a higher level of detail than an image (first feature amount) obtained by the radar.

The determination unit 24b includes a machine learning model 26b. As in the machine learning model 26a illustrated in FIG. 2, the machine learning model 26b is a circuit that outputs a second label when given certain second measurement data. The machine learning model 26b is generated by measuring a large number of inspection targets by the measurement unit 22b and assigning one or more second labels to each of second measurement data. The second label is input by the operator.

As in the first machine learning model 26a, also in the second machine learning model 26b, one second label may be assigned to one second measurement data, or a plurality of second labels may be assigned to one second measurement data.

The determination unit 24b makes the second determination using the machine learning model 26b. The second determination is to determine one or more second labels corresponding to the second measurement data. An example of the second determination is "what the inspection target possesses and where". The determination unit 24b outputs two second labels of "something like a smartphone" (what) and "left chest pocket" (where) with respect to one second measurement data. The second label is part of the final label of the inspection system. The reliability of the device is defined separately from the reliability of the first, second, and third labels. The reliability $f(x)$ of the determination of "what is the object to be inspected" is defined by the product of the reliability of the label and the reliability of the device. Therefore, even when the reliability $x3$ of the third label is lower than the reliability $x2$ of the second label ($x2 > x3$), the reliability $f(x3)$ of the determination may be higher than the reliability $f(x2)$ of the determination ($f(x2) \leq f(x3) \leq 1.0$). Since the level of detail of the data obtained by the measurement unit 22b is higher than the level of detail of the data obtained by the measurement unit 22a, the reliability of the second label is higher than the reliability of the first label.

The determination unit 24b may determine the second label by performing an arithmetic process on the second measurement data without using the machine learning model 26b.

In a case where a person in charge is present at the installation place of the inspection system, the determination unit 24b may notify the person in charge of the information about the second label by text display or sound output using a display device or a speaker (not illustrated). In a case where a person in charge is not present at the installation place of the inspection system, the determination unit 24b may transmit the second label to an electronic device carried by the person in charge or a display device in a management room where the person in charge waits via the communication unit 30b. The determination unit 24b may include a memory that temporarily stores the second label.

The communication unit 30b transmits the second measurement data together with the inspection target ID to the control device 12. The communication unit 30b receives the second update data transmitted from the control device 12. The communication unit 30b transmits the second update data to the update unit 28b. The update unit 28b updates the machine learning model 26b based on the second update data. The correspondence relationship between the second measurement data and the second label is changed by the update of the machine learning model 26b. After updating the machine learning model 26b, the measurement unit 22b may measure the inspection target again, and the determination unit 24b may make the second determination again based on the measurement data measured again. After updating the machine learning model 26b, the measurement unit 22b may not measure again the inspection target, and the determination unit 24b may make the second determination again based on the already obtained second measurement data.

The third inspection device 10c includes an entry detection unit 20c, a measurement unit 22c, a determination unit 24c, and a communication unit 30c. The entry detection unit 20c, the measurement unit 22c, the determination unit 24c, and the communication unit 30c respectively correspond to the entry detection unit 20a (or entry detection unit 20b), the measurement unit 22a (or measurement unit 22b), the determination unit 24a (or determination unit 24b), the update unit 28a (or update unit 28b), and the communication unit 30a (or communication unit 30b).

When the entry detection unit 20c detects that the inspection target which has been inspected by the second inspection device 10b enters the inspection range of the third inspection device 10c, the measurement unit 22c starts measurement.

Examples of the measurement unit 22c include a radar, a metal detector, a liquid detector, an X-ray diagnosis device, and a camera. In a case where the measurement unit 22c is a camera, when detecting that the inspection target reaches the inspection area of the third inspection device 10c, the entry detection unit 20c prompts the inspection target to take out the belongings from the pocket and place the belongings on the imaging table in front of the measurement unit 22c using the display device or the speaker.

The measurement unit 22c may obtain the first feature amount of the inspection target, as in the measurement units 22a and 22b. The measurement unit 22a may obtain the first feature amount at the first level of detail, the measurement unit 22b may obtain the first feature amount at the second level of detail, and the measurement unit 22c may obtain the first feature amount at the third level of detail. The third level of detail may be higher than the first level of detail and the second level of detail. Communication unit 30c receives the inspection target ID from the control device 12. The measurement unit 22c transmits the first feature amount as third measurement data to the determination unit 24c and the communication unit 30c. The measurement unit 22c may include a memory that temporarily stores the third measurement data.

When the measurement units 22a, 22b, and 22c are radars, each of the measurement units 22a, 22b, and 22c transmits an electromagnetic wave to an inspection target and receives a reflected wave from the inspection target. The reflectance of the electromagnetic wave to the metal object is higher than the reflectance of the electromagnetic wave to the skin. Each of the measurement units 22a, 22b, and 22c obtains an image indicating the distribution of the reflectance of the electromagnetic wave at each point of the inspection target. The level of detail is related to the resolution of the image. The resolution of the image obtained by the measurement unit 22b may be higher than that of the image obtained by the measurement unit 22a. The resolution of the image obtained by the measurement unit 22c may be higher than that of the image obtained by the measurement unit 22b.

Alternatively, the measurement unit 22c may obtain the third feature amount of the inspection target, unlike the measurement units 22a and 22b. The third feature amount is different from the first feature amount and the second feature amount. The measurement unit 22a may obtain the first feature amount at the first level of detail, the measurement unit 22b may obtain the second feature amount at the second level of detail, and the measurement unit 22c may obtain the third feature amount at the third level of detail. The third level of detail may be higher than the first level of detail and the second level of detail. Assuming that the measurement unit 22a is a radar, the measurement unit 22b is a metal detector, and the measurement unit 22c is a camera, when the metal object is identified, an image (third feature amount) by the camera that captures the belongings has a higher level of detail than an image (first feature amount) obtained by the radar and information (second feature amount) obtained by the metal detector. The measurement unit 22c may transmit the third feature amount as third measurement data to the determination unit 24c.

The determination unit 24c includes a machine learning model 26c. The machine learning model 26c is a circuit that outputs a third label when given certain third measurement data, as in the machine learning model 26a illustrated in FIG. 2 and the machine learning model 26b. The machine learning model 26c is generated by measuring a large number of inspection targets by the measurement unit 22c and assigning a large number of third labels to a large number of third measurement data. The third label is input by the operator. As in the first machine learning model 26a and the second machine learning model 26b, also in the third machine learning model 26c, one third label may be assigned to one piece of third measurement data, or a plurality of third labels may be assigned to one piece of third measurement data. Since the third inspection device 10c is the last inspection device, the third label is the final label of the inspection system. The third label includes the first label and the second label.

The determination unit 24c makes the third determination based on the third measurement data using the machine learning model 26c. The third determination is to determine one or more third labels corresponding to the third measurement data. Examples of the third determination include "whether the inspection target possesses a metal object or nor" and "what and where the inspection target possesses". The determination unit 24c outputs three third labels of "metal object possessed" or "metal object not possessed", "smartphone" (what), and "left chest pocket" (where). In a case where the measurement unit 22c is a camera, it is possible to determine what (smartphone) the belongings are by performing an image analysis on the captured image of the belongings. The reliability f(x3) of the third determination is 1, which is higher than the reliabilities f(x1) and f(x2) of the first and second determinations.

The determination unit 24c may determine the third label by performing an arithmetic process on the third measurement data without using the machine learning model 26c.

In a case where a person in charge is present at the installation place of the inspection system, the third determination unit 24c may notify the person in charge of the information about the third label by text display or sound output using a display device or a speaker (not illustrated). In a case where a person in charge is not present at the installation place of the inspection system, the determination unit 24c may transmit the third label to an electronic device carried by the person in charge or a display device in a management room where the person in charge waits via the communication unit 30c. When the third label indicates that "the inspection target has a handgun in the left chest pocket", a person in charge may carefully check the inspection target. The third determination unit 24c may include a memory that temporarily stores the third label.

Determination unit 24c transmits the third label to the communication unit 30c. The communication unit 30c transmits the third measurement data and the third label corresponding thereto to the control device 12 together with the inspection target ID.

The control device 12 includes a communication unit 42, a controller 44, a measurement data memory 46, and an update data memory 48.

FIG. 3 is a diagram for explaining an example of data stored in the measurement data memory 46 according to the arrangement. The controller 44 writes the first measurement data M10, M11, M12, ... transmitted from the first inspection device 10a, the second measurement data M20, M21, M22, ... transmitted from the second inspection device 10b, and the third measurement data M30, M31, M32, ... transmitted from the third inspection device 10c, and the third label into the measurement data memory 46 for each inspection target ID. The third label includes the first label and the second label.

The third label with the inspection target ID = 00000000 includes a first label L30a and second labels L30b and L30c. The third label with the inspection target ID = 00000001 includes a first label L31a and second labels L31b and L31c.

The third label with the inspection target ID = 00000002 includes a first label L32a and second labels L32b and L32c.

FIG. 4 is a diagram for describing an example of update data stored in the update data memory 48 according to the arrangement. The update data includes a large number of pairs of measurement data and teacher labels.

The reliability of the label of the determination unit 24a and the reliability of the label of the determination unit 24b may decrease. An example of the case of the decrease includes a change in the installation environment of the inspection devices 10a and 10b after generation of the machine learning models 26a and 26b. In this case, the first and second measurement data themselves change so that the machine learning models 26a and 26b cannot output a correct label for the measurement data. In order to maintain the reliability of the labels of the determination units 24a and 24b, it is preferable to update the machine learning models 26a and 26b based on the actual measurement data.

The actual measurement data is stored in the measurement data memory 46. Since the third label has reliability of 1, the third label includes an accurate first label and an accurate second label. When the machine learning models 26a and 26b are updated using the third label, the reliability of determination by the determination units 24a and 24b can be maintained. The controller 44 associates the first labels L30a, L31a, L32a, ... among the third labels in the measurement data memory 46 as first teacher labels with the first measurement data M10, M11, M12, ... to create the first update data. The controller 44 associates the second labels L30b, L30c; L31b, L31c; L32b, L32c; ... among the third labels in the measurement data memory 46 as second teacher labels with the second measurement data M20, M21, M22, ... to create the second update data.

At the update timing, the controller 44 transmits the first and second update data to the update units 28a and 28b, respectively. The update units 28a and 28b respectively update the machine learning models 26a and 26b based on the update data. The update unit 28a changes the first labels L1, L2, L3, ... of the machine learning model 26a as illustrated in FIG. 2 to the first teacher labels L30a, L31a, L32a, ... included in the first update data. The update unit 28b changes the first labels of the machine learning model 26b to the first teacher labels included in the second update data. As a result, the correspondence relationship between the measurement data and the label is updated, and the determination units 24a and 24b are more likely to make a correct determination.

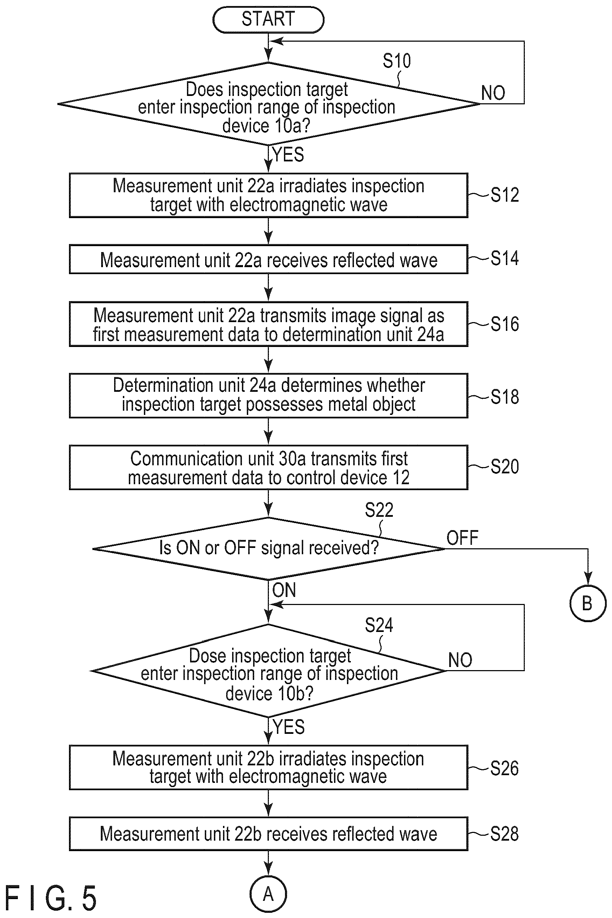

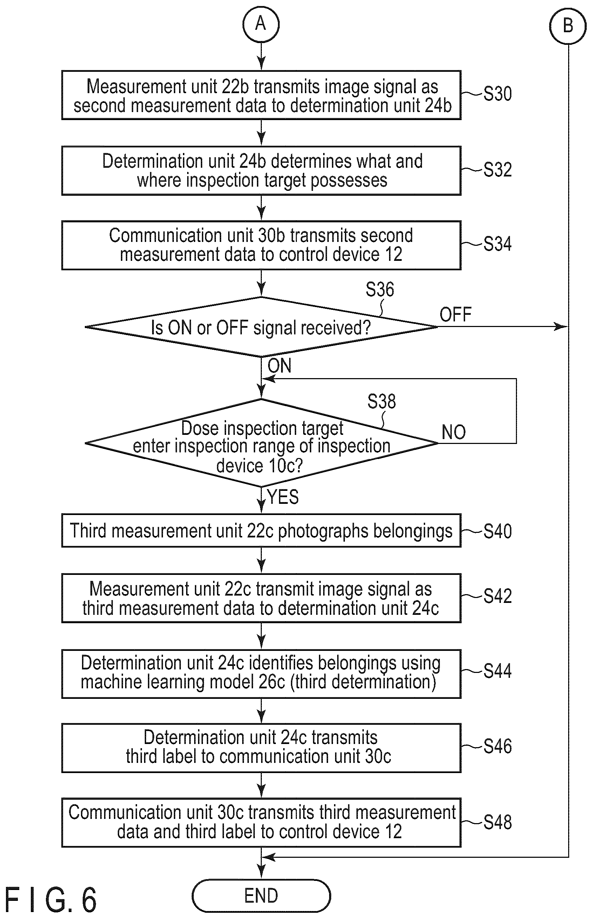

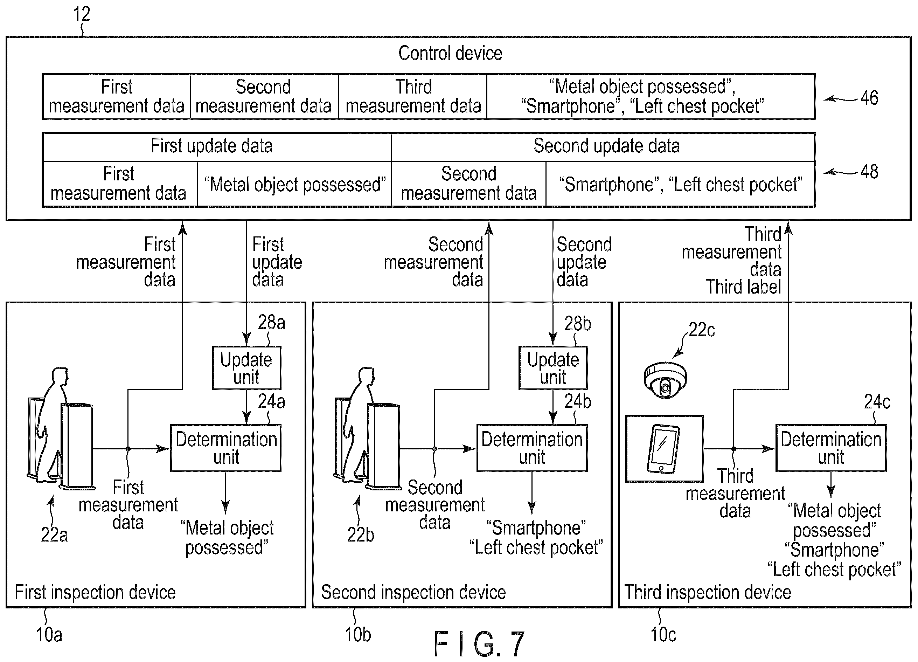

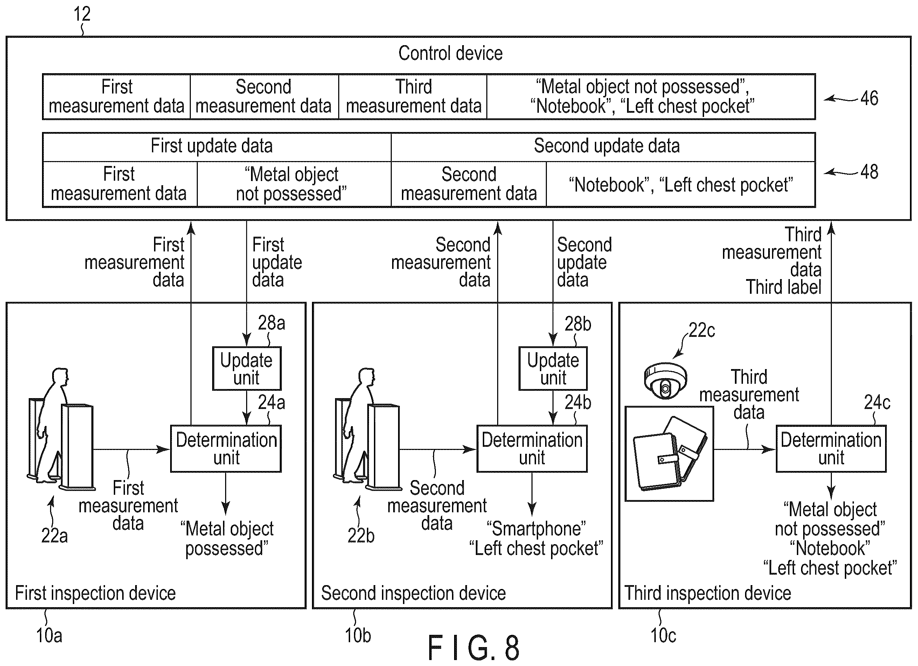

FIGS. 5 and 6 are flowcharts for explaining an example of processing of the inspection devices 10a, 10b, and 10c of the inspection system according to the arrangement. FIG. 7 is a diagram for describing a first application example of the inspection system according to the arrangement. FIG. 8 is a diagram for describing a second application example of the inspection system according to the arrangement. In the first and second application examples, it is assumed that the measurement unit 22a is a first radar, the measurement unit 22b is a second radar, the resolution of the second radar is higher than the resolution of the first rater, and the measurement unit 22c is a camera. In the first application example (FIG. 7), the first label is "metal object possessed", the second labels are "smartphone" and "left chest pocket", and the third labels are "metal object possessed", "smartphone", and "left chest pocket". In the second application example (FIG. 8), the first label is "metal object possessed", the second labels are "smartphone" and "left chest pocket", and the third labels are "metal object not possessed", "notebook", and "left chest pocket".

The entry detection unit 20a determines whether the inspection target enters the inspection range of first inspection device 10a (S10). When the entry detection unit 20a detects the entry of the inspection target (S10: YES), the first measurement unit (radar) 22a irradiates the inspection target with an electromagnetic wave (S12). The measurement unit 22a receives the reflected wave of the electromagnetic wave from the inspection target (S14). The measurement unit 22a generates an image signal indicating the reflection intensity of each point of the inspection target based on the received signal. The measurement unit 22a transmits the image signal as the first measurement data to the determination unit 24a and the communication unit 30a together with the inspection target ID (S16).

The determination unit 24a uses the machine learning model 26a to determine whether the inspection target possesses a metal object based on the image signal (first determination) (S18). In both the first application example and the second application example, the first label is "metal object possessed".

The communication unit 30a transmits the first measurement data to the control device 12 (S20).

The inspection system includes three inspection devices 10a, 10b, and 10c, but all the three inspection devices 10a, 10b, and 10c do not necessarily perform inspection. Depending on the installation location of the inspection system, there may be a date and time and a time zone in which the highest priority is given to not disturbing the flow of people. Depending on the purpose of the inspection, the inspection by the first inspection device 10a or up to the second inspection device 10b may be sufficient. Therefore, there is a case where only the first inspection device 10a performs the inspection or a case where the third inspection device 10c does not perform the inspection. The control device 12 can select whether to operate the second inspection device 10b and the third inspection device 10c depending on the installation situation. The control device 12 transmits an ON signal or an OFF signal to the second inspection device 10b and the third inspection device 10c.

The second inspection device 10b determines whether an ON signal or an OFF signal from the control device 12 is received (S22). When an OFF signal is received, the second inspection device 10b does not perform the inspection, and the processing of the inspection system ends.

When receiving an ON signal, the entry detection unit 20b determines whether the inspection target enters the inspection range of the second inspection device 10b (S24). When the entry detection unit 20b detects the entry of the inspection target (S24: YES), the second measurement unit (radar) 22b irradiates the inspection target with an electromagnetic wave (S26). The measurement unit 22b receives the reflected wave of the electromagnetic wave from the inspection target (S28). The measurement unit 22b generates an image signal indicating the reflection intensity of each point of the inspection target to transmit the image signal to the determination unit 24b as the second measurement data (S30).

The determination unit 24b uses the machine learning model 26b to determine what and where the inspection target possesses based on the image signal (second determination) (S32). In both the first application example (FIG. 7) and the second application example (FIG. 8), the second label is "carry a smartphone in the left chest pocket".

The communication unit 30b transmits the second measurement data together with the inspection target ID to the control device 12 (S34).

The third inspection device 10c determines whether an ON signal or an OFF signal from the control device 12 is received (S36). When an OFF signal is received, the third inspection device 10c does not perform the inspection, and the processing of the inspection system ends.

When receiving an ON signal, the entry detection unit 20c determines whether the inspection target enters the inspection range of the third inspection device 10c (S38). When the entry detection unit 20c detects the entry of the inspection target (S38: YES), the third measurement unit (camera) 22c photographs the belongings on the imaging table (S40). When the inspection target enters the inspection range of the third inspection device 10c, the belongings are placed on the imaging table within the imaging range of the measurement unit 22c. The measurement unit 22c generates an image signal of the belongings to transmit the image signal as the third measurement data to the determination unit 24c and the communication unit 30c (S42).

The determination unit 24c identifies the belongings of the inspection target using the machine learning model 26c based on the image signal (third determination) (S44). In the first application example (FIG. 7), it is assumed that the third labels (third determination results) are "metal object possessed" and "carry a smartphone in the left chest pocket". In the second application example (FIG. 8), it is assumed that the third labels are "metal object not possessed" and "carry a notebook in the left chest pocket".

The determination unit 24c transmits the third label or labels to the communication unit 30c (S46).

The communication unit 30c transmits the third measurement data and the third label or labels to the control device 12 together with the inspection target ID (S48).

Thereafter, the processing of the system ends. Although the measurement data are transmitted to the control device 12 at three steps S16, S34, and S48, the measurement data of the first inspection device 10a and the second inspection device 10b may be collectively transmitted when the measurement data of the third inspection device 10c is transmitted.

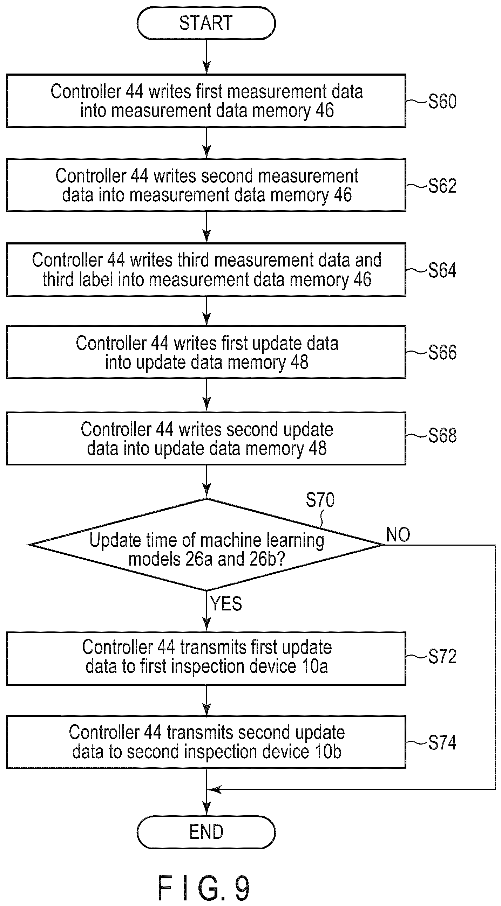

FIG. 9 is a flowchart for explaining an example of processing of the control device 12 of the inspection system according to the arrangement.

When the communication unit 42 receives the first measurement data and the inspection target ID, the controller 44 writes the first measurement data and the inspection target ID into the measurement data memory 46 (S60).

When the communication unit 42 receives the second measurement data and the inspection target ID, the controller 44 writes the second measurement data into the measurement data memory 46 (S62). The controller 44 writes the first measurement data and the second measurement data into the measurement data memory 46 in association with each other based on the inspection target ID.

When the communication unit 42 receives the third measurement data and the third labels, the controller 44 writes the third measurement data and the third labels into the measurement data memory 46 (S64). The controller 44 writes the first measurement data, the second measurement data, the third measurement data, and the third labels (metal object possessed, smartphone, left chest pocket) into the measurement data memory 46 in association with each other based on the inspection target ID.

The controller 44 generates first update data by associating the first label (metal object possessed) in the third labels with the first measurement data, and writes the first update data into the update data memory 48 (S66). The controller 44 generates second update data by associating the second labels (smartphone, left chest pocket) in the third labels with the second measurement data, and writes the second update data into the update data memory 48 (S68).

As illustrated in FIGS. 3 and 4, the controller 44 receives the first, second, and third measurement data for a large number of inspection targets, and generates a large number of first and second update data.

The controller 44 determines whether it is time to update the machine learning models 26a and 26b of the inspection devices 10a and 10b (S70). The controller 44 may be set to periodically perform the update after a lapse of a certain period of time, or may be set to perform the update when an environmental sensor (not illustrated) detects a change in an installation environment (temperature, humidity, etc.) of the system.

When it is determined that it is the time of update (S70: YES), the controller 44 transmits the first update data to the first inspection device 10a (S72). The controller 44 transmits the second update data to the second inspection device 10b (S74).

When it is determined that it is not the time of update (S70: NO), or after transmission of the second update data, the controller 44 ends the process.

When receiving the first and second update data, the inspection devices 10a and 10b update the machine learning models 26a and 26b using the update units 28a and 28b, respectively. In the first application example (FIG. 7), the first and second labels output by the determination units 24a and 24b match the third label or labels. Therefore, even when the machine learning models 26a and 26b are updated, the first and second labels do not change. In the second application example (FIG. 8), the first label is "metal object possessed", the third label is "metal object not possessed", and the first label does not match the third label. Part related to an object in the second label is a smartphone, part related to an object in the third label is a notebook, and part of the second label does not match part of the third label. When the machine learning models 26a and 26b are updated, the first label is changed to "metal object not possessed", and part related to an object in the second label is changed to "a notebook".

In this manner, by updating the machine learning model for obtaining the first and second labels based on the update data generated based on the third label, the reliability of the first and second labels is improved.

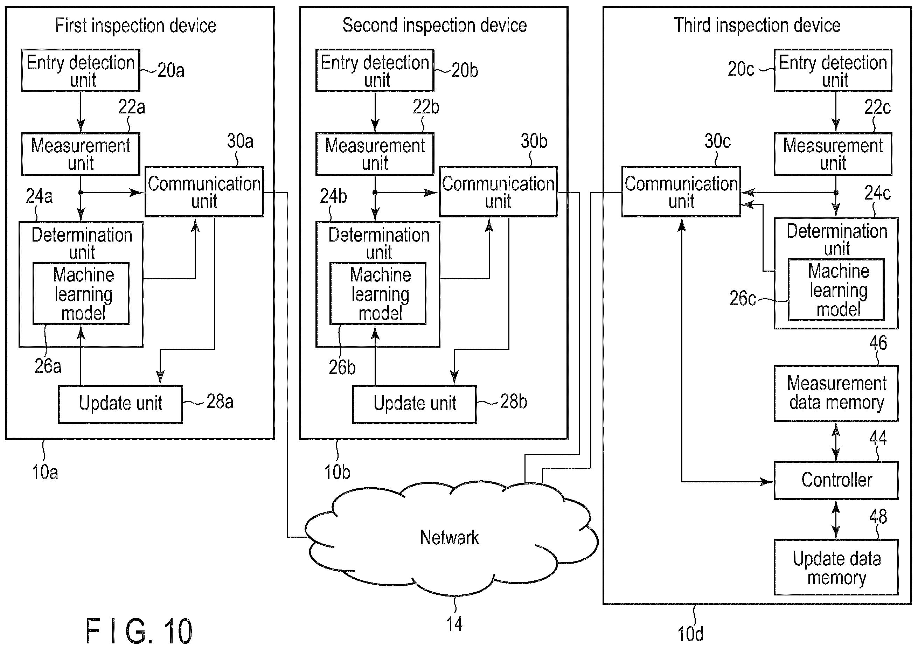

FIG. 10 is a diagram for describing a modification of the inspection system according to the arrangement. The inspection system according to the modification does not include the control device 12. A third inspection device 10d has the function of the control device 12. As in the third inspection device 10c, the third inspection device 10d includes the entry detection unit 20c, the measurement unit 22c, the determination unit 24c, the machine learning model 26c, and the communication unit 30c. The third inspection device 10d further includes the controller 44, the measurement data memory 46, and the update data memory 48. The first, second, and third inspection devices 10a, 10b, and 10d are connected to a network 14.

Each of the first and second inspection devices 10a and 10b transmits the first and second measurement data to the third inspection device 10d via the network 14. As in the control device 12, the controller 44 (the third inspection device 10d) writes the first and second measurement data into the measurement data memory 46, generates update data, and writes the update data into the update data memory 48. At the time of updating the machine learning models 26a and 26b, the communication unit 30c (the third inspection device 10d) transmits the first and second update data to the first and second inspection devices 10a and 10b via the network 14. Therefore, the inspection system according to the modification has the same effect as the inspection system according to the arrangement.

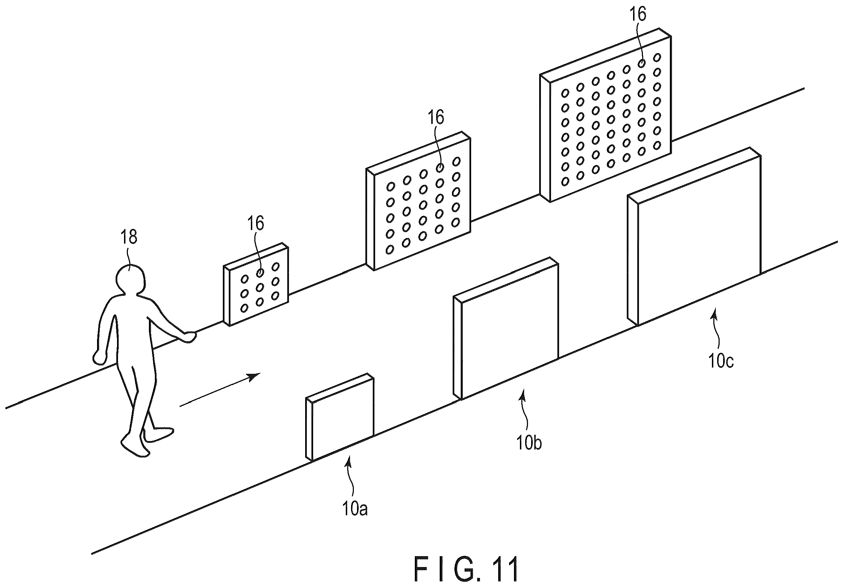

FIG. 11 is a diagram for describing an example of arrangement of inspection devices 10a, 10b, and 10c (or 10d) according to the arrangement. An inspection target 18 walks along the passage. The inspection devices 10a, 10b, and 10c (or 10d) are disposed along the passage in order in the traveling direction. The inspection target 18 is sequentially inspected by the first, second, and third inspection devices 10a, 10b, and 10c (or 10d) during walking. Here, it is assumed that each of the inspection devices 10a, 10b, and 10c (or 10d) includes a radar. The radar includes antennas 16 located on both sides of the passage. The number of antennas included in the radar of the inspection device 10a through which the inspection target 18 passes first is the smallest. The inspection time of the inspection device 10a is the shortest, while the reliability of the determination result is the worst. The number of antennas included in the radar of the inspection device 10c (or 10d) through which the inspection target 18 passes last is the largest. The inspection time of the inspection device 10c (or 10d) is the longest, while the reliability of the determination result is the best.

The inspection devices 10a, 10b, and 10c (or 10d) and the control device 12 are connected by a wireless LAN or a wired LAN. Examples of the wireless LAN are WiFi (registered trademark) and Bluetooth (registered trademark). As the wired LAN, a metal cable or an optical fiber may be used.

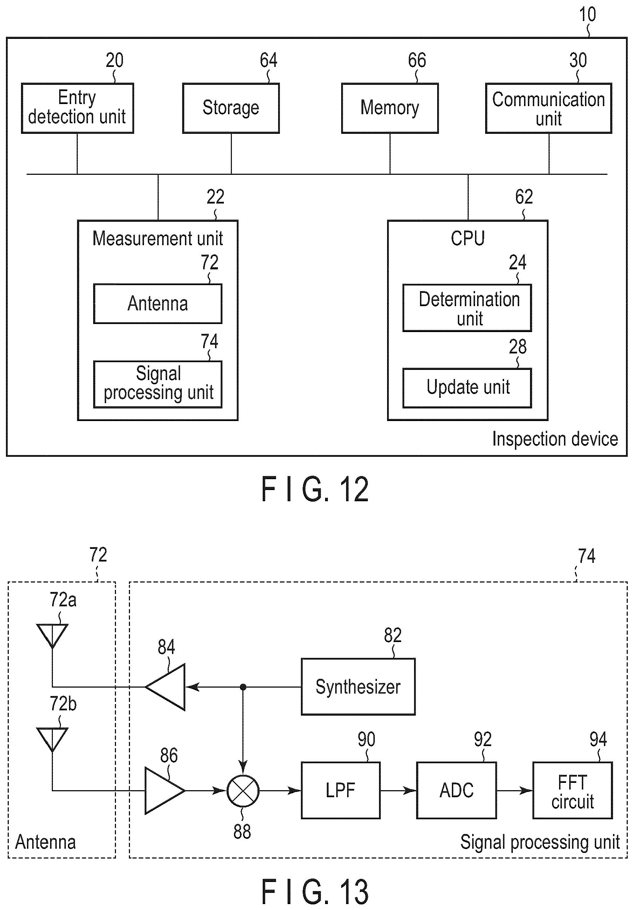

FIG. 12 is a diagram for describing an example of a detailed configuration of each of the first, second, and third inspection devices 10a, 10b, and 10c (or 10d) according to the arrangement. The first, second, and third inspection devices 10a, 10b, and 10c (or 10d) are referred to as an inspection device 10 in a case where it is not particularly necessary to distinguish them. The first, second, and third entry detection units 20a, 20b, and 20c are referred to as an entry detection unit 20 in a case where it is not particularly necessary to distinguish them. The first, second, and third measurement units 22a, 22b, and 22c are referred to as a measurement unit 22 in a case where it is not particularly necessary to distinguish them. The first, second, and third determination units 24a, 24b, and 24c are referred to as a determination unit 24 in a case where it is not particularly necessary to distinguish them. The first, second, and third machine learning models 26a, 26b, and 26c are referred to as a machine learning model 26 in a case where it is not particularly necessary to distinguish them. The first, second, and third update units 28a, 28b, and 28c are referred to as an update unit 28 in a case where it is not particularly necessary to distinguish them. The first, second, and third communication units 30a, 30b, and 30c are referred to as a communication unit 30 in a case where it is not particularly necessary to distinguish them. The inspection device 10 includes the entry detection unit 20, the measurement unit 22, the communication unit 30, a CPU 62, a storage 64, and a memory 66. The entry detection unit 20, the measurement unit 22, the communication unit 30, the storage 64, and the memory 66 are connected to a bus line of the CPU 62. The measurement unit 22 includes an antenna 72 and a signal processing unit 74.

The antenna 72 may include at least one transmit/receive antenna, or may include at least one transmit antenna and at least one receive antenna. The transmit direction or the position of the transmit point of the electromagnetic wave of the antenna 72 can be mechanically changed by a mechanical scanning mechanism, or can be electronically changed by an electronic scanning circuit provided in the signal processing unit 74. The measurement unit 22 may include both a scanning mechanism and a scanning circuit.

The electromagnetic wave used in the radar includes an electromagnetic wave having a wavelength of 1 mm to 30 mm. An electromagnetic wave having a wavelength of 1 mm to 10 mm is referred to as a millimeter wave. An electromagnetic wave having a wavelength of 10 mm to 100 mm is referred to as a microwave. When an electromagnetic wave is transmitted to a person, the electromagnetic wave is reflected by an object present on a propagation path of the electromagnetic wave. By measuring the reflection intensity of the electromagnetic wave reflected at a certain distance, it is possible to determine whether the object present at the distance is a human body or a dangerous article such as a handgun or an explosive. Inspection accuracy is proportional to the number of transmit points of the electromagnetic wave (the number of antennas) per person.

An example of the antenna 72 is a microstrip antenna (also referred to as a patch antenna).

The signal processing unit 74 causes the antenna 72 to transmit an electromagnetic wave, causes the antenna 72 to receive a reflected wave, and processes a received signal from the antenna 72 to generate a signal representing belongings of the inspection target. The signal processing unit 74 may be formed integrally with the antenna 72, or may be formed separately from the antenna 72 and disposed at a position different from the antenna 72.

The storage 64 is a non-volatile storage device that stores programs executed by the CPU 62 and various pieces of data. The storage 64 includes an HDD, an SSD, or the like. The memory 66 is a nonvolatile memory that stores programs and data read from the storage 64 or various pieces of data generated during inspection. An example of the program is a program that causes the CPU 62 to execute the functions of the determination unit 24 and the update unit 28. The CPU 62 functions as the determination unit 24 and the update unit 28 by executing a program read from the storage 64 and stored in the memory 66. Note that the determination unit 24 and the update unit 28 may be formed by hardware.

The inspection device 10 may include a keyboard and a display device. The keyboard is used, for example, when a user sets a label. The display device may display an image of the inspection target to notify a person in charge of the inspection result.

FIG. 13 is a block diagram for explaining an example of the measurement unit 22 according to the arrangement. The antenna 72 includes one or more transmit antennas 72a and one or more receive antennas 72b. The transmit antenna 72a and the receive antenna 72b may not be separately provided. One antenna may transmit and electromagnetic wave and receive the reflected wave.

The signal processing unit 74 includes a synthesizer 82, a power amplifier 84, a low noise amplifier 86, a mixer 88, a low-pass filter (LPF) 90, an A/D converter (ADC) 92, and a fast Fourier transformation (FFT) circuit 94. The signal generated by the synthesizer 82 is amplified by the power amplifier 84 and then supplied to the transmit antenna 72a. An electromagnetic wave is transmitted from the transmit antenna 72a to the inspection range. The transmitted electromagnetic wave is reflected by all objects existing in the inspection range. The reflected wave is received by the receive antenna 72b. A received signal output from the receive antenna 72b is input to the first input terminal of the mixer 88 via the low noise amplifier 86. The output signal of the synthesizer 82 is input to the second input terminal of the mixer 88.

The mixer 88 combines the output signal of the synthesizer 82 and the received signal to generate an intermediate frequency (IF) signal. The intermediate frequency signal is input to the A/D converter 92 via the low-pass filter 90. The digital signal output from the A/D converter 92 is analyzed by the Fast Fourier transform (FFT) circuit 94, and the reflection intensity of the electromagnetic wave of the object is obtained.

The operation principle of the radar will be described. There are various combinations of transmit/receive antenna. For example, a reflected wave of an electromagnetic wave transmitted from one transmit antenna may be received by a plurality of receive antennas. Reflected waves of electromagnetic waves transmitted from a plurality of transmit antennas may be received by one receive antenna. Reflected waves of electromagnetic waves transmitted from a plurality of transmit antennas may be received by a plurality of receive antennas. Here, a method of obtaining the reflection intensity when a reflected wave of an electromagnetic wave transmitted from one transmit antenna is received by one receive antenna will be described.

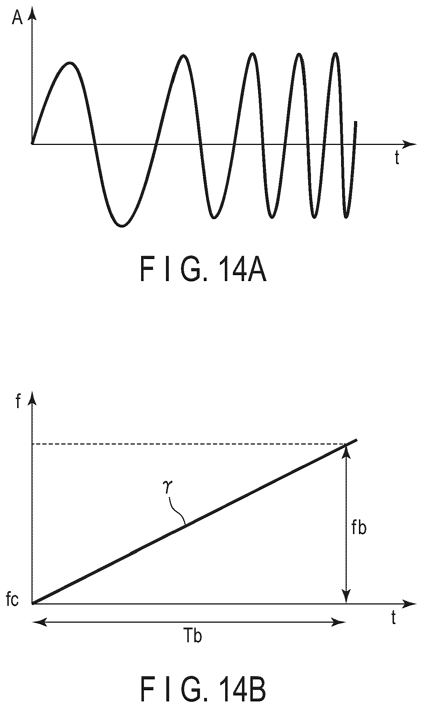

The synthesizer 82 generates a frequency modulated continuous wave (FMCW) signal whose frequency linearly increases with the lapse of time. The FMCW signal is also referred to as a chirp signal. FIGS. 14A and 14B are diagrams for describing an example of a waveform of a chirp signal according to the arrangement. The chirp signal is as shown in FIG. 14A, where an amplitude "A" is expressed as a function of time t. The chirp signal is as shown in FIG. 14B, where a frequency f is expressed as a function of time t. As illustrated in FIG. 14B, the chirp signal is represented by a center frequency fc, a modulation bandwidth fb, and a signal time width Tb. The slope of the chirp signal is referred to as a frequency change rate (chirp rate) $\gamma$.

A transmission wave St(t) of the FMCW signal radiated from the transmit antenna 72a is expressed by Equation 1.

$$St(t) = cos[2\pi(fc \cdot t + \gamma t2/2)] \qquad \text{Equation 1}$$

The chirp rate $\gamma$ is expressed by Equation 2.

$$\gamma = fb/Tb \qquad \text{Equation 2}$$

The reflected wave from the object away from the transmit antenna 72a by the distance R is observed by the receive antenna 72b with a delay of $\Delta t = 2R/c$ from the transmission timing. "c" is the speed of light. When a reflection intensity of the object is "a", the received signal Sr(t) is expressed by Equation 3.

$$Sr(t) = a \cdot cos[2\pi fc(t - \Delta t) + \pi\gamma (t - \Delta t)2] \qquad \text{Equation 3}$$

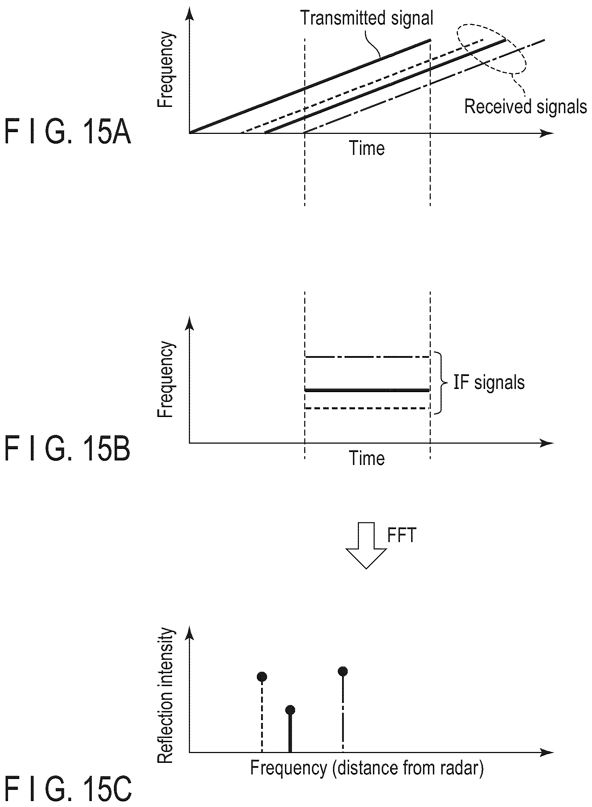

FIGS. 15A to 15C are diagrams for explaining an example of a received signal in the signal processing unit 74 in a case where there is a plurality of objects, for example, three objects according to the arrangement. FIG. 15A illustrates a relationship between a transmitted signal/received signal and time. As illustrated in FIG. 15A, the frequency of the transmitted signal linearly changes with time. The received signal is delayed by $\Delta t$ with respect to the transmitted signal. In a case where there is a plurality of objects, a reflected wave from the closest object is received earliest as indicated by a broken line. A reflected wave from the farthest object is received last as indicated by an alternate long and short dash line.

As illustrated in FIG. 13, the received signal is multiplied by the transmitted signal in the mixer 88 and input to the low-pass filter 90. The output signal of the low-pass filter 90 is referred to as an IF signal z(t) and is expressed by Equation 4.

$$z(t) = a \cdot cos(2\pi\Delta t\gamma t) \qquad \text{Equation 4}$$

FIG. 15B illustrates a relationship between the frequency of the IF signal and time. Under an ideal environment without noise or the like, the frequency is constant for each reflected wave. Here, the frequency of the reflected wave from the closest object is the lowest as indicated by a broken line. The frequency of the reflected wave from the farthest object is the highest as indicated by an alternate long and short dash line.

The reflection intensity in the frequency domain can be calculated by performing FFT on the IF signal z(t) in the time domain illustrated in Equation 4 in the FFT circuit 94. Therefore, the amplitude at each point in the frequency domain that is the result of the FFT of the IF signal corresponds to the reflection intensity for each distance from the radar. The frequency and the distance from the radar have the relationship of Equation 5.

$$fif = \Delta t\gamma = 2R\gamma/c \qquad \text{Equation 5}$$

FIG. 15C illustrates a relationship between the reflection intensity and the frequency obtained by performing the FFT on the IF signal in the time domain. In this manner, by obtaining the amplitude of the frequency domain signal of the IF signal, the reflection intensity for each distance from the radar can be obtained.

When the inspection device 10 is installed, the distance between the inspection device 10 and the inspection target 18 is determined. For example, assuming that the distance between the inspection device 10 and the inspection target 18 is two meters, the measurement unit 22 obtains the frequency fif of the IF signal corresponding to the point at the distance R (= two meters) from Equation 5. The measurement unit 22 can extract the reflection intensity of the frequency fif as the reflection intensity of the object from among the reflection intensities of a large number of received signals as illustrated in FIG. 15C.

The above-described processing is performed for each transmit point while changing (scanning) the transmit point of the electromagnetic wave along the scanning direction.

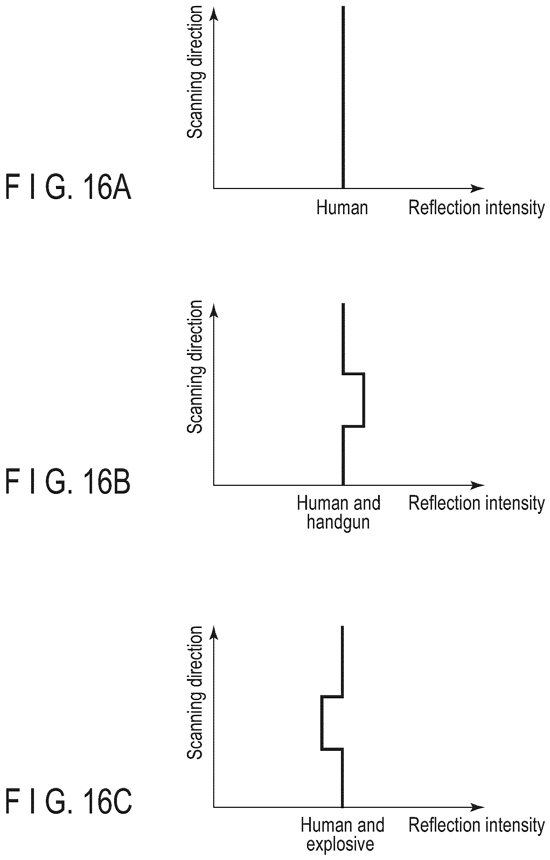

FIGS. 16A to 16C are diagrams for explaining an example of the reflection intensity distribution according to the arrangement. As illustrated in FIGS. 16A to 16C, the distribution of the reflection intensity of the electromagnetic wave on the scanning line varies depending on the substance that reflects the electromagnetic wave.

FIG. 16A illustrates a reflection intensity distribution of an electromagnetic wave in a case where the inspection target (for example, human) possesses nothing. Since the electromagnetic wave is reflected by the skin of the inspection target, the reflection intensity of the electromagnetic wave does not change regardless of the position of the transmit point. The distribution of the reflection intensity is a flat distribution. The reflection intensity distribution in FIG. 16A is a reference reflection intensity distribution corresponding to a reference inspection result.

FIG. 16B illustrates the reflection intensity distribution of the electromagnetic wave in a case where the inspection target has a handgun (metal) at the center in the scanning direction. Since metal has a higher reflection intensity than skin, the reflection intensity of the electromagnetic wave at the transmit point corresponding to the position of the handgun is higher than the reflection intensity of the electromagnetic wave at other points. Since the horizontal axis indicates the reflection intensity (the right indicates a high reflection intensity), the reflection intensity of the electromagnetic wave has a distribution protruding to the right.

FIG. 16C illustrates the reflection intensity distribution of the electromagnetic wave in a case where the inspection target has the explosive at the center in the scanning direction. Since the explosive absorbs the electromagnetic wave better than the skin, the reflection intensity at the transmit point corresponding to the position of the explosive is lower than the reflection intensity at other points. The reflection intensity of the electromagnetic wave has a distribution protruding to the left. The distribution can be identified by a difference between the reflection intensity values at least at two points.

Since the measurement unit 22 is only required to be able to estimate a region where there is a possibility that a predetermined object exists, a high resolution for a difference (for example, 1 cm) between the clothing and the human body is not required as the resolution in the distance direction. A resolution of about several cm is sufficient. The measurement unit 22 can use an inexpensive in-vehicle millimeter wave radar that is currently in circulation.

When the reflection intensity of the inspection target is acquired at several points (at least two points) on the scanning line in this manner, the determination unit 24 determines the belongings using the machine learning model 26 based on the reflection intensity.

The determination unit 24 may compare the shape of the reflection intensity distribution output from measurement unit 22 with the distribution shape of the reference reflection intensity. The reference reflection intensity may include a reflection intensity distribution of an inspection target having no belongings, a reflection intensity distribution of an inspection target having a metal object such as a handgun, or a reflection intensity distribution of an inspection target having a powder target such as an explosive.

According to the inspection system of the arrangement, the plurality of inspection devices sequentially perform the inspection while gradually increasing the reliability of the detection. When a certain inspection device has achieved the detection target, the detection result is fed back to another inspection device. In a case where the machine learning model is used for the inspection, another inspection device updates the machine learning model based on the detection result. As a result, the reliability of the inspection result by another inspection device is improved.

While certain arrangements have been described, these arrangements have been presented by way of example only, and are not intended to limit the scope of the claims. Indeed, the system and method described herein may be embodied in a variety of other forms; furthermore, various omissions, substitutions and changes in the form of the system and method described herein may be made.

## Claims

1. An inspection system comprising:

   a first measurement unit (22a) configured to measure a target;
   a first determination unit (24a) configured to make a first determination on whether the target includes a predetermined object using a first machine learning model (26a) based on a first measurement result by the first measurement unit (22a);
   a second measurement unit (22b) configured to measure the target;
   a second determination unit (24b) configured to make a second determination on whether the target includes the predetermined object based on a second measurement result by the second measurement unit (22b), wherein the first determination comprises a first feature amount of the target and the second determination comprises a second feature amount of the target, the feature amount being different from the first feature amount; or the first measurement unit obtains a first feature amount at a first level of detail of the target and the second measurement unit obtains the first feature amount at a second level of detail of the target, the second level being higher than the first level, or reliability of the second determination is higher than reliability of the first determination; and
   a processing unit (12) configured to generate first update data of the first machine learning model (26a) based on a result of the second determination and transmit the first update data to the first determination unit (24a), **characterized in that** the second measurement unit is configured to measure the target after the first measurement unit (22a) measures the target.

2. The inspection system of claim 1, **characterized in that** the first determination unit (24a) is configured to update the first machine learning model (26a) based on the first update data.

3. The inspection system of claim 2, **characterized in that** the first determination unit (24a) is configured to make the first determination again after updating the first machine learning model (26a).

4. The inspection system of claim 1, **characterized in that**
the second determination unit (24b) is configured to make the second determination using a second machine learning model based on the second measurement result by the second measurement unit (22b).

5. The inspection system of one of claim 1 to claim 4, **characterized in that**
each of the first measurement unit (22a) and the second measurement unit (22b) comprises a radar, a metal detector, a liquid detector, an X-ray diagnosis device, or a camera.

6. The inspection system of one of claim 1 to claim 4, **characterized in that**
the second measurement unit (22b) comprises a metal detector or a camera.

7. The inspection system of claim 1, further comprising:

   a third measurement unit (22c) configured to measure the target; and
   a third determination unit (24c) configured to make a third determination on whether the target includes the predetermined object based on a third measurement result by the third measurement unit (22c), and **characterized in that**
   the third measurement unit (22c) is configured to measure the target after the first measurement unit (22a) measures the target, and
   the second measurement unit (22b) is configured to measure the target after the third measurement unit (22c) measures the target.

8. The inspection system of claim 7, **characterized in that**

   the third determination unit (24c) is configured to make the third determination using a third machine learning model (26c) based on the third measurement result by the third measurement unit (22c),
   the processing unit (12) is configured to generate second update data of the third machine learning model (26c) based on a result of the second determination and transmit the second update data to the third determination unit (24c), and
   the third determination unit (24c) is configured to update the third machine learning model (26c) based on the second update data.

9. The inspection system of claim 8, **characterized in that**
the third determination unit (24c) is configured to make the third determination again after updating the third machine learning model (26c).

10. The inspection system of one of claim 7 to claim 9, **characterized in that**

    the first measurement unit (22a) is configured to obtain a first feature amount of the target,
    the second measurement unit (22b) is configured to obtain a second feature amount of the target,
    the third measurement unit (22c) is configured to measure a third feature amount of the target,
    the second feature amount is different from the first feature amount, and
    the third feature amount is different from the second feature amount.

11. The inspection system of claim 2, **characterized in that**
the first measurement unit (22a) is configured to measure the target again after updating the first machine learning model (26a).

12. A controller- implemented inspection method comprising:

    making a first determination on whether a target includes a predetermined object using a machine learning model (26a) based on a first measurement result by a first measurement unit (22a) configured to measure a target;
    making a second determination on whether the target includes the predetermined object based on a second measurement result by a second measurement unit (22b) configured to measure the target, wherein the first determination comprises a first feature amount of the target and the second determination comprises a second feature amount of the target, the feature amount being different from the first feature amount; or the first measurement unit obtains a first feature amount at a first level of detail of the target and the second measurement unit obtains the first feature amount at a second level of detail of the target, the second level being higher than the first level, or reliability of the second determination is higher than reliability of the first determination; and generating update data of the machine learning model (26a) based on a result of the second determination; and transmitting the update data to the machine learning model (26a),

**characterized in that** the second measurement unit is configured to measure the target after the first measurement unit (22a) measures the target.

**Patentansprüche**

1. Ein Inspektionssystem, umfassend:

   eine erste Messeinheit (22a), die dazu konfiguriert ist, ein Zielobjekt zu messen;
   eine erste Bestimmungseinheit (24a), die dazu konfiguriert ist, unter Verwendung eines ersten Modells für maschinelles Lernen (26a) auf Grundlage eines ersten Messergebnisses durch die erste Messeinheit (22a) eine erste Bestimmung darüber vorzunehmen, ob das Zielobjekt ein vorbestimmtes Objekt enthält;
   eine zweite Messeinheit (22b), die dazu konfiguriert ist, das Zielobjekt zu messen;
   eine zweite Bestimmungseinheit (24b), die dazu konfiguriert ist, auf Grundlage eines zweiten Messergebnisses durch die zweite Messeinheit (22b) eine zweite Bestimmung darüber vorzunehmen, ob das Zielobjekt das vorbestimmte Objekt enthält, wobei die erste Bestimmung eine erste Merkmalsgröße des Zielobjekts umfasst und die zweite Bestimmung eine zweite Merkmalsgröße des Zielobjekts umfasst, wobei die Merkmalsgröße von der ersten Merkmalsgröße verschieden ist; oder die erste Messeinheit eine erste Merkmalsgröße auf einer ersten Detailebene des Zielobjekts ermittelt und die zweite Messeinheit die erste Merkmalsgröße auf einer zweiten Detailebene des Zielobjekts ermittelt, wobei die zweite Ebene höher ist als die erste Ebene, oder die Zuverlässigkeit der zweiten Bestimmung höher ist als die Zuverlässigkeit der ersten Bestimmung; und
   eine Verarbeitungseinheit (12), die dazu konfiguriert ist, auf Grundlage eines Ergebnisses der zweiten Bestimmung erste Aktualisierungsdaten des ersten Modells für maschinelles Lernen (26a) zu erzeugen und die ersten Aktualisierungsdaten an die erste Bestimmungseinheit (24a) zu übertragen,
   **dadurch gekennzeichnet, dass** die zweite Messeinheit dazu konfiguriert ist, das Zielobjekt zu messen, nachdem die erste Messeinheit (22a) das Zielobjekt gemessen hat.

2. Inspektionssystem nach Anspruch 1, **dadurch gekennzeichnet, dass** die erste Bestimmungseinheit (24a) dazu konfiguriert ist, das erste Modell für maschinelles Lernen (26a) auf Grundlage der ersten Aktualisierungsdaten zu aktualisieren.

3. Inspektionssystem nach Anspruch 2, **dadurch gekennzeichnet, dass** die erste Bestimmungseinheit (24a) dazu konfiguriert ist, die erste Bestimmung nach dem Aktualisieren des ersten Modells für maschinelles Lernen (26a) erneut vorzunehmen.

4. Inspektionssystem nach Anspruch 1, **dadurch gekennzeichnet, dass** die zweite Bestimmungseinheit (24b) dazu konfiguriert ist, die zweite Bestimmung unter Verwendung eines zweiten Modells für maschinelles Lernen auf Grundlage des zweiten Messergebnisses durch die zweite Messeinheit (22b) vorzunehmen.

5. Inspektionssystem nach einem der Ansprüche 1 bis 4, **dadurch gekennzeichnet, dass** jeweils die erste Messeinheit (22a) und die zweite Messeinheit (22b) ein Radar, einen Metalldetektor, einen Flüssigkeitsdetektor, ein Röntgendiagnosegerät oder eine Kamera umfasst.

6. Inspektionssystem nach einem der Ansprüche 1 bis 4, **dadurch gekennzeichnet, dass** die zweite Messeinheit (22b) einen Metalldetektor oder eine Kamera umfasst.

7. Inspektionssystem nach Anspruch 1, ferner umfassend:

   eine dritte Messeinheit (22c), die dazu konfiguriert ist, das Zielobjekt zu messen; und
   eine dritte Bestimmungseinheit (24c), die dazu konfiguriert ist, auf Grundlage eines dritten Messergebnisses durch die dritte Messeinheit (22c) eine dritte Bestimmung darüber vorzunehmen, ob das Zielobjekt das vorbestimmte Objekt enthält, und **dadurch gekennzeichnet, dass** die dritte Messeinheit (22c) dazu konfiguriert ist, das Zielobjekt zu messen, nachdem die erste Messeinheit (22a) das Zielobjekt gemessen hat, und

die zweite Messeinheit (22b) dazu konfiguriert ist, das Zielobjekt zu messen, nachdem die dritte Messeinheit (22c) das Zielobjekt gemessen hat.

8.  Inspektionssystem nach Anspruch 7, **dadurch gekennzeichnet, dass**

    die dritte Bestimmungseinheit (24c) dazu konfiguriert ist, die dritte Bestimmung unter Verwendung eines dritten Modells für maschinelles Lernen (26c) auf Grundlage des dritten Messergebnisses durch die dritte Messeinheit (22c) vorzunehmen,
    die Verarbeitungseinheit (12) dazu konfiguriert ist, auf Grundlage eines Ergebnisses der zweiten Bestimmung zweite Aktualisierungsdaten des dritten Modells für maschinelles Lernen (26c) zu erzeugen und die zweiten Aktualisierungsdaten an die dritte Bestimmungseinheit (24c) zu übertragen, und
    die dritte Bestimmungseinheit (24c) dazu konfiguriert ist, das dritte Modell für maschinelles Lernen (26c) auf Grundlage der zweiten Aktualisierungsdaten zu aktualisieren.

9.  Inspektionssystem nach Anspruch 8, **dadurch gekennzeichnet, dass** die dritte Bestimmungseinheit (24c) dazu konfiguriert ist, die dritte Bestimmung nach dem Aktualisieren des dritten Modells für maschinelles Lernen (26c) erneut vorzunehmen.

10. Inspektionssystem nach einem der Ansprüche 7 bis 9, **dadurch gekennzeichnet, dass**

    die erste Messeinheit (22a) dazu konfiguriert ist, eine erste Merkmalsgröße des Zielobjekts zu ermitteln,
    die zweite Messeinheit (22b) dazu konfiguriert ist, eine zweite Merkmalsgröße des Zielobjekts zu ermitteln,
    die dritte Messeinheit (22c) dazu konfiguriert ist, eine dritte Merkmalsgröße des Zielobjekts zu messen,
    die zweite Merkmalsgröße von der ersten Merkmalsgröße verschieden ist und
    die dritte Merkmalsgröße von der zweiten Merkmalsgröße verschieden ist.

11. Inspektionssystem nach Anspruch 2, **dadurch gekennzeichnet, dass**
    die erste Messeinheit (22a) dazu konfiguriert ist, das Zielobjekt nach dem Aktualisieren des ersten Modells für maschinelles Lernen (26a) erneut zu messen.

12. Ein durch eine Steuereinheit implementiertes Inspektionsverfahren, umfassend:

    Vornehmen einer ersten Bestimmung darüber, ob ein Zielobjekt ein vorbestimmtes Objekt enthält, unter Verwendung eines Modells für maschinelles Lernen (26a) auf Grundlage eines ersten Messergebnisses durch eine erste Messeinheit (22a), die dazu konfiguriert ist, ein Zielobjekt zu messen;
    Vornehmen einer zweiten Bestimmung darüber, ob das Zielobjekt das vorbestimmte Objekt enthält, auf Grundlage eines zweiten Messergebnisses durch eine zweite Messeinheit (22b), die dazu konfiguriert ist, das Zielobjekt zu messen, wobei die erste Bestimmung eine erste Merkmalsgröße des Zielobjekts umfasst und die zweite Bestimmung eine zweite Merkmalsgröße des Zielobjekts umfasst, wobei die Merkmalsgröße von der ersten Merkmalsgröße verschieden ist; oder die erste Messeinheit eine erste Merkmalsgröße auf einer ersten Detailebene des Zielobjekts ermittelt und die zweite Messeinheit die erste Merkmalsgröße auf einer zweiten Detailebene des Zielobjekts ermittelt, wobei die zweite Ebene höher ist als die erste Ebene, oder die Zuverlässigkeit der zweiten Bestimmung höher ist als die Zuverlässigkeit der ersten Bestimmung; und
    Erzeugen von Aktualisierungsdaten des Modells für maschinelles Lernen (26a) auf Grundlage eines Ergebnisses der zweiten Bestimmung; und
    Übertragen der Aktualisierungsdaten an das Modell für maschinelles Lernen (26a),
    **dadurch gekennzeichnet, dass** die zweite Messeinheit dazu konfiguriert ist, das Zielobjekt zu messen, nachdem die erste Messeinheit (22a) das Zielobjekt gemessen hat.

## Revendications

1.  Système d'inspection comprenant :

    une première unité de mesure (22a) configurée pour mesurer une cible ;
    une première unité de détermination (24a) configuree pour effectuer une première détermination de si la cible comprend un objet prédéterminé à l'aide d'un premier modèle d'apprentissage automatique sur la base d'un premier résultat de mesure obtenu par la première unité de mesure (22a) et (26a) ;

une deuxième unité de mesure (22b) configurée pour mesurer la cible ;
une deuxième unité de détermination (24b) configurée pour effectuer une deuxième détermination de si la cible comprend l'objet prédéterminé sur la base d'un deuxième résultat de mesure obtenu par la deuxième unité de mesure (22b), dans lequel la première détermination comprend une première quantité de caractéristique de la cible et la deuxième détermination comprend une deuxième quantité de caractéristique de la cible, la quantité de caractéristique étant différente de la première quantité de caractéristique ; ou bien la première unité de mesure obtient une première quantité de caractéristique à un premier niveau de détail de la cible et la deuxième unité de mesure obtient la première quantité de caractéristique à un deuxième niveau de détail de la cible, le deuxième niveau étant supérieur au premier niveau, ou bien une fiabilité de la deuxième détermination est supérieure à une fiabilité de la première détermination ; et
une unité de traitement (12) configurée pour générer des premières données de mise à jour du premier modèle d'apprentissage automatique (26a) sur la base d'un résultat de la deuxième détermination et pour transmettre les premières données de mise à jour à la première unité de détermination (24a),
**caractérisé en ce que** la deuxième unité de mesure est configurée pour mesurer la cible après que la première unité de mesure (22a) mesure la cible.

2. Système d'inspection selon la revendication 1, **caractérisé en ce que**
la première unité de détermination (24a) est configurée pour mettre à jour le premier modèle d'apprentissage automatique (26a) sur la base des premières données de mise à jour.

3. Système d'inspection selon la revendication 2, **caractérisé en ce que**
la première unité de détermination (24a) est configurée pour effectuer à nouveau la première détermination après avoir mis à jour le premier modèle d'apprentissage automatique (26a).

4. Système d'inspection selon la revendication 1, **caractérisé en ce que**
la deuxième unité de détermination (24b) est configurée pour effectuer la deuxième détermination à l'aide d'un deuxième modèle d'apprentissage automatique sur la base du deuxième résultat de mesure obtenu par la deuxième unité de mesure (22b).

5. Système d'inspection selon l'une des revendications 1 à 4, **caractérisé en ce que**
chacune des première unité de mesure (22a) et deuxième unité de mesure (22b) comprend un radar, un détecteur de métal, un détecteur de liquide, un dispositif de diagnostic par rayons X ou une caméra.

6. Système d'inspection selon l'une des revendications 1 à 4, **caractérisé en ce que**
la deuxième unité de mesure (22b) comprend un détecteur de métal ou une caméra.

7. Système d'inspection selon la revendication 1, comprenant en outre :

une troisième unité de mesure (22c) configurée pour mesurer la cible ; et
une troisième unité de détermination (24c) configurée pour effectuer une troisième détermination de si la cible comprend l'objet prédéterminé sur la base d'un troisième résultat de mesure obtenu par la troisième unité de mesure (22c), et **caractérisé en ce que**
la troisième unité de mesure (22c) est configurée pour mesurer la cible après que la première unité de mesure (22a) mesure la cible, et
la deuxième unité de mesure (22b) est configurée pour mesurer la cible après que la troisième unité de mesure (22c) mesure la cible.

8. Système d'inspection selon la revendication 7, **caractérisé en ce que**

la troisième unité de détermination (24c) est configurée pour effectuer la troisième détermination à l'aide d'un troisième modèle d'apprentissage automatique (26c) sur la base du troisième résultat de mesure obtenu par la troisième unité de mesure (22c),
l'unité de traitement (12) est configurée pour générer des deuxièmes données de mise à jour du troisième modèle d'apprentissage automatique (26c) sur la base d'un résultat de la deuxième détermination et pour transmettre les deuxièmes données de mise à jour à la troisième unité de détermination (24c), et
la troisième unité de détermination (24c) est configurée pour mettre à jour le troisième modèle d'apprentissage automatique (26c) sur la base des deuxièmes données de mise à jour.

**9.** Système d'inspection selon la revendication 8, **caractérisé en ce que**
la troisième unité de détermination (24c) est configurée pour effectuer à nouveau la troisième détermination après avoir mis à jour le troisième modèle d'apprentissage automatique (26c).

**10.** Système d'inspection selon l'une des revendications 7 à 9, **caractérisé en ce que**

la première unité de mesure (22a) est configurée pour obtenir une première quantité de caractéristique de la cible,
la deuxième unité de mesure (22b) est configurée pour obtenir une deuxième quantité de caractéristique de la cible,
la troisième unité de mesure (22c) est configurée pour mesurer une troisième quantité de caractéristique de la cible,
la deuxième quantité de caractéristique est différente de la première quantité de caractéristique, et
la troisième quantité de caractéristique est différente de la deuxième quantité de caractéristique.

**11.** Système d'inspection selon la revendication 2, **caractérisé en ce que**
la première unité de mesure (22a) est configurée pour mesurer à nouveau la cible après avoir mis à jour le premier modèle d'apprentissage automatique (26a).

**12.** Procédé d'inspection mis en œuvre par un contrôleur, comprenant :

la réalisation d'une première détermination de si une cible comprend un objet prédéterminé à l'aide d'un modèle d'apprentissage automatique (26a) sur la base d'un premier résultat de mesure obtenu par une première unité de mesure (22a) configurée pour mesurer une cible ;
la réalisation d'une deuxième détermination de si la cible comprend l'objet prédéterminé sur la base d'un deuxième résultat de mesure obtenu par une deuxième unité de mesure (22b) configurée pour mesurer la cible, dans lequel la première détermination comprend une première quantité de caractéristique de la cible et la deuxième détermination comprend une deuxième quantité de caractéristique de la cible, la quantité de caractéristique étant différente de la première quantité de caractéristique ; ou bien la première unité de mesure obtient une première quantité de caractéristique à un premier niveau de détail de la cible et la deuxième unité de mesure obtient la première quantité de caractéristique à un deuxième niveau de détail de la cible, le deuxième niveau étant supérieur au premier niveau, ou bien une fiabilité de la deuxième détermination est supérieure à une fiabilité de la première détermination ; et
la génération de données de mise à jour du modèle d'apprentissage automatique (26a) sur la base d'un résultat de la deuxième détermination ; et
la transmission des données de mise à jour au modèle d'apprentissage automatique (26a),
**caractérisé en ce que** la deuxième unité de mesure est configurée pour mesurer la cible après que la première unité de mesure (22a) mesure la cible.

Third inspection device — 10c

- Entry detection unit — 20c / 22c
- Measurement unit — 24c
- Determination unit
  - Machine learning model — 26c
- Communication unit — 30c

Second inspection device — 10b

- Entry detection unit — 20b / 22b
- Measurement unit — 24b
- Determination unit
  - Machine learning model — 26b
- Communication unit — 30b
- Update unit — 28b

First inspection device — 10a

- Entry detection unit — 20a / 22a
- Measurement unit — 24a
- Determination unit
  - Machine learning model — 26a
- Communication unit — 30a
- Update unit — 28a

Control device — 12

- Communication unit — 42
- Controller — 44
- Measurement data memory — 46
- Update data memory — 48

F I G. 1

Machine learning model 26a

| First measurement data | First labels |
|---|---|
| M1 | L1 |
| M2 | L2 |
| M3 | L3 |
| . . . | . . . |

FIG. 2

Measurement data memory 46

| Inspection target ID | First measurement data | Second measurement data | Third measurement data | Third label |
|---|---|---|---|---|
| 00000000 | M10 | M20 | M30 | L30a,L30b,L30c |
| 00000001 | M11 | M21 | M31 | L31a,L31b,L31c |
| 00000002 | M12 | M22 | M32 | L32a,L32b,L32c |
| . . . | . . . | . . . | . . . | . . . |

FIG. 3

Update data memory 48

| First update data | | Second update data | |
|---|---|---|---|
| First measurement data | First teacher label | Second measurement data | Second teacher label |
| M10 | L30a | M20 | L30b,L30c |
| M11 | L31a | M21 | L31b,L31c |
| M12 | L32a | M22 | L32b,L32c |
| . . . | . . . | . . . | . . . |

FIG. 4

```
                    ┌─────────────┐
                    │    START    │
                    └─────────────┘
                           │
                           ▼                          S10
          ◇ Does inspection target                        ◇──── NO
            enter inspection range of inspection
            device 10a?
                           │ YES
                           ▼
          ┌───────────────────────────────────────┐
          │ Measurement unit 22a irradiates inspection │ ─ S12
          │ target with electromagnetic wave          │
          └───────────────────────────────────────┘
                           │
                           ▼
          ┌───────────────────────────────────────┐
          │ Measurement unit 22a receives reflected wave │ ─ S14
          └───────────────────────────────────────┘
                           │
                           ▼
          ┌───────────────────────────────────────┐
          │ Measurement unit 22a transmits image signal as │ ─ S16
          │ first measurement data to determination unit 24a │
          └───────────────────────────────────────┘
                           │
                           ▼
          ┌───────────────────────────────────────┐
          │ Determination unit 24a determines whether │ ─ S18
          │ inspection target possesses metal object │
          └───────────────────────────────────────┘
                           │
                           ▼
          ┌───────────────────────────────────────┐
          │ Communication unit 30a transmits first │ ─ S20
          │ measurement data to control device 12 │
          └───────────────────────────────────────┘
                           │
                           ▼                          S22
          ◇ Is ON or OFF signal received?  ◇──── OFF ──── B
                           │ ON
                           ▼                          S24
          ◇ Dose inspection target                        ◇──── NO
            enter inspection range of inspection
            device 10b?
                           │ YES
                           ▼
          ┌───────────────────────────────────────┐
          │ Measurement unit 22b irradiates inspection │ ─ S26
          │ target with electromagnetic wave          │
          └───────────────────────────────────────┘
                           │
                           ▼
          ┌───────────────────────────────────────┐
          │ Measurement unit 22b receives reflected wave │ ─ S28
          └───────────────────────────────────────┘
                           │
                           ▼
                           A
```

F I G. 5

Ⓐ                                          Ⓑ

| Measurement unit 22b transmits image signal as second measurement data to determination unit 24b | ～S30 |

| Determination unit 24b determines what and where inspection target possesses | ～S32 |

| Communication unit 30b transmits second measurement data to control device 12 | ～S34 |

S36

◇ Is ON or OFF signal received? ◇ — OFF →

ON

S38

◇ Dose inspection target enter inspection range of inspection device 10c? ◇ — NO

YES

| Third measurement unit 22c photographs belongings | ～S40 |

| Measurement unit 22c transmit image signal as third measurement data to determination unit 24c | ～S42 |

| Determination unit 24c identifies belongings using machine learning model 26c (third determination) | ～S44 |

| Determination unit 24c transmits third label to communication unit 30c | ～S46 |

| Communication unit 30c transmits third measurement data and third label to control device 12 | ～S48 |

FIG.6        ( END )

FIG.7

F I G. 8

START

Controller 44 writes first measurement data
into measurement data memory 46 ──S60

Controller 44 writes second measurement
data into measurement data memory 46 ──S62

Controller 44 writes third measurement data and
third label into measurement data memory 46 ──S64

Controller 44 writes first update data
into update data memory 48 ──S66

Controller 44 writes second update
data into update data memory 48 ──S68

S70

Update time of machine learning
models 26a and 26b?                    NO

YES

Controller 44 transmits first update
data to first inspection device 10a ──S72

Controller 44 transmits second update
data to second inspection device 10b ──S74

END

F I G. 9

F I G. 10

EP 4 435 671 B1

F I G. 11

F I G. 12

F I G. 13

F I G. 14A

F I G. 14B

F I G. 15A

F I G. 15B

FFT

F I G. 15C

F I G. 16A

Scanning direction / Human / Reflection intensity

F I G. 16B

Scanning direction / Human and handgun / Reflection intensity

F I G. 16C

Scanning direction / Human and explosive / Reflection intensity

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MARVIN KLINGNER et al.** *X^3KD: Knowledge Distillation Across Modalities, Tasks and Stages for Multi-Camera 3D Object Detection*

- **CHEN HONGYUAN et al.** *Super-resolution guided knowledge distillation for low-resolution image classification*, 2022